# EUROPEAN PATENT APPLICATION

(11) **EP 3 313 067 A1**
(43) Date of publication of application: **25.04.2018**
(21) Application number: 16195151.2
(22) Date of filing: 21.10.2016
(51) Int. Cl.: H04N 7/18, B61L 3/00, G06F 21/55, G07C 5/00

(54) **METHOD OF MONITORING A HUMAN-MACHINE INTERFACE ON A RAIL VEHICLE AND ASSOCIATED HUMAN-MACHINE INTERFACE AND MONITORING INSTALLATION**

(71) Applicant: Bombardier Transportation GmbH, 10785 Berlin (DE)
(72) Inventor: DE COEN, Luc, 9230 Wetteren (BE); CONAN, Loic, 59130 Lambersart (FR)
(74) Representative: Alatis

(57) **Abstract**

In order to monitor a human-machine interface comprising an electronic visual display (36) and a HMI logic hardware unit (34) on a rail vehicle, the following operations are performed by the HMI logic hardware unit (34): generating screenshot data sets representative of successive images displayed on the electronic visual display; and streaming the screenshot data sets, which may each be associated with a screenshot timestamp.

## Description

### TECHNICAL FIELD OF THE INVENTION

The present invention relates to a method of monitoring train events, and more specifically a human-machine interface on board a rail vehicle. It also relates to a train monitoring installation including a human-machine interface.

### BACKGROUND ART

An apparatus for determining the status of a vehicle, comprising a video camera configured to receive a visual image of a vehicle dashboard is disclosed in WO 2015/124939. An image processor is configured to identify one or more vehicle telemetry signals from the image and provide an output in accordance with the one or more vehicle telemetry signals. The apparatus may comprise a vehicle location determining unit. The output may further comprise a location stamp or a time stamp associated with the vehicle telemetry signals. A plurality of cameras may be provided in order to monitor distributed vehicle status displays. For example, a first camera may be provided to receive a visual image of a dashboard and a second camera may be provided to receive a visual image of a central console of the vehicle. The camera has to be mounted on or within, or integrated with, the vehicle such that the dashboard is within a field of view of the camera. For example, the camera can be mounted on or in a steering column directly in front of the dashboard so that an unimpeded view of the dashboard is obtained. The camera also has to be sited so that it does not obscure the driver's view.

Video cameras are also used in train event recording systems for generating video data associated with the rail vehicle or its surroundings, as disclosed in US 2015/0339863.

### SUMMARY OF THE INVENTION

The invention aims to provide means for monitoring a human-machine interface in a rail vehicle, which overcomes the problem of the proper location of the cameras.

According to a first aspect of the invention, there is provided a method of monitoring a human-machine interface comprising an electronic visual display and a HMI logic hardware unit on a rail vehicle, characterised in that the following operations are performed by the HMI logic hardware unit:
- generating screenshot data sets representative of successive images displayed on the electronic visual display; and
- streaming the screenshot data sets.

Using the HMI logic hardware unit to generate and stream screenshot data sets makes it possible to completely avoid video cameras in the vicinity of the human-machine interface.

According to one embodiment, generating the screenshot data sets includes periodically reading bitmap information directed to the electronic visual display, preferably from a video frame buffer. Preferably, generating the screenshot data sets further includes one or more of the following operations:
- scaling, preferably downscaling, the bitmap information;
- sampling the scaled bitmap information at a predetermined rate to generate video frames; and/or
- encoding the video frames with a predetermined codec to generate encoded video frames each constituting one of the screenshot data sets.

In most cases, the screen resolution that is desired for the human-machine interface is high for obvious ergonomic reasons, and can be reduced for the purpose of monitoring and storing the relevant data shown on the human-machine interface.

According to a preferred embodiment, streaming the screenshot data sets includes associating each of the screenshot data sets with a screenshot timestamp. The timestamps provide a time reference for further processing of the screenshot data sets.

According to a preferred embodiment, streaming the screenshot data sets includes generating datagrams each including a payload including at least a part of one of the screenshot data sets and a header including the screenshot timestamp associated with the said one of the screenshot data sets. The resulting datagrams can be suitably streamed using a IP network.

According to one embodiment, the following operations are performed by the HMI logic hardware unit: sending a real-time control protocol sender report including a relative sending time value of a clock of the HMI logic hardware unit and a Coordinated Universal Time value received from a reference server. This enables a precise synchronisation of the stream with other data.

According to a preferred embodiment, the following operations are performed by the HMI logic hardware unit:
- generating successive HMI metadata sets relative to the human machine interface;
- streaming the HMI metadata sets relative to the human machine interface associated with metadata timestamps.

Preferably, the HMI metadata sets include one or more of the following:
- an event type;
- contextual information;
- an absolute timestamp in Coordinated Universal Time.

Advantageously, the same interaction with the human machine interface, e.g. a series of buttons pressed on a touch screen, may correspond to a series of primitive level events, a series of user interface level events and one or more application level events. Preferably, the HMI event type and contextual information relate to at least one of the following:
- primitive level events each indicative of a change of state of the human machine interface generated by a user input interface or the HMI logic hardware unit;
- user interface level events each indicative of a change of state of the human machine interface generated by a user input interface or the HMI logic hardware unitand interpreted in function of further data relative to a current state of the human machine interface;
- application level events each indicative of a state or change of state of an application or function realised by the human machine interface

At the primitive level and for each pressed button, the event type would be "touchscreen pressed" and the contextual information would be the corresponding bidirectional screen coordinates. At the user interface level, the event type would be further qualified as resulting from the interpretation of the primitive level event with the contextual knowledge of the input screen being displayed on the touchscreen and would be e.g. "button N pressed" and the contextual information would include the corresponding bi-dimensional screen coordinates and an information that the button has an "enabled" state. At the application level, the event type might be "entered passenger information system trip code" and the contextual information would be the actually entered code. More generally, the event type may refer to any change of state of the human-machine interface, e.g. "touchscreen pressed" or "change of displayed graphic user interface". The contextual information may include additional information e.g. X-Y coordinates of the pressed portion of the touchscreen, or an identifier of the displayed graphic user interface.

According to an embodiment, the HMI metadata sets include sporadic metadata sets generated in response to a notification of a sporadic event, in particular an input signal from an input interface of the human machine interface, such as a touch screen. Sporadic metadata sets may also include data sporadically generated e.g. when a content of at least part of the visual display changes, e.g. when a graphical user interface (GUI) used for displaying information on the visual display changes, or when a user enters a command on the human-machine interface.

According to an embodiment, generating the metadata sets includes regularly generating metadata sets relative to a state or change of state of the human machine interface. Regular data sets may be generated e.g. by sending a GUI identifier on a regular basis, e.g. every 100 ms.

Preferably, streaming the metadata sets includes generating metadata datagrams each including a payload including one of the metadata sets and a header including the metadata timestamp associated with the said one of the metadata sets. The metadata sets can be streamed with the same IP protocol as the screenshot data sets.

Advantageously, generating successive metadata sets relative to the human machine interface includes generating identification data, in particular identification data for identifying the human-machine interface unit and/or screen identification data for identifying a content of the screenshot data sets.

According to an embodiment, the method further comprises the following operation performed by an on-board or wayside storage unit, preferably a CCTV recorder: receiving the streamed screenshot data sets and storing the streamed screenshot data sets in a first in first out buffer of the on-board or wayside recorder. When the buffer is full, the oldest data is replaced with the incoming data. According to a preferred embodiment, the method further comprises a locking procedure performed by the on-board or wayside storage unit triggered by a lock-start event to prevent overwriting of critical data stored and/or to be stored in a critical portion of the first in first out buffer, said critical portion being preferably defined by a pre-lock buffer size and an after-lock buffer size or a lock-stop event. In order to ensure that critical data will be processed and analysed, the locking procedure further comprises unlocking the critical portion from an image data server after the critical data has been retrieved from the data storage unit to the wayside storage unit. Preferably, the lock-start event is generated by a locking source, wherein the locking source is one or more of the following: a human-machine interface unit, an on-board train control and management system, and a remote operational control centre.

According to a preferred embodiment, the method further comprises a merging operation performed by the on-board or wayside storage unit, wherein the merging operation includes gathering additional time-stamped data from a train control and management system and/or from a passenger information system and merging said additional time-stamped data with the streamed screenshot data before storing the streamed screenshot data sets in the first in first out buffer of the on-board or wayside storage unit together with the merged time-stamped data. The additional time-stamped data may include train event data, as well as wayside event data. Train event data can come from train control and management system or from passenger information system whereas wayside event data is transmitted to the on-board train event monitoring system. It may include audio-stream data, e.g. conversations between on-board staff members, between staff members and a wayside traffic control centre, or messages to the passengers.

According to another aspect of the invention, there is provided a human-machine interface comprising an electronic visual display and a HMI logic hardware unit, wherein the HMI logic hardware unit is operative to carry out the method described hereinbefore.

According to another aspect of the invention, there is provided a human-machine interface comprising an electronic visual display and a HMI logic hardware unit, wherein the HMI logic hardware unit comprises:
- screenshot data sets generating means for generating screenshot data sets representative of successive images displayed on the electronic visual display;
- transmission means for streaming the screenshot data sets.

The human-machine interface has preferably an input interface. According to an embodiment, the human-machine interface includes a touch screen, which provides both the visual display and the input interface.

Preferably, the transmission means includes means for associating each of the screenshot data sets with a screenshot timestamp.

Preferably, the HMI logic hardware unit includes video processing means for:
- scaling, preferably downscaling, the bitmap information;
- sampling the scaled bitmap information at a predetermined rate to generate video frames; and/or
- encoding the video frames with a predetermined codec to generate encoded video frames each constituting one of the screenshot data sets.

According to another aspect of the invention, a train event monitoring installation comprising:
- the human-machine interface previously described;
- an on-board or wayside storage unit, preferably a CCTV recorder, for receiving the streamed screenshot data sets and storing the streamed screenshot data sets in a first in first out buffer of the on-board or wayside storage unit

According to a preferred embodiment, the train event monitoring installation further comprises a processing unit for receiving the screenshot data sets from the HMI logic hardware unit as well as time-stamped datagrams from the HMI logic hardware unit or other sources and for storing the screenshot data sets and time-stamped datagrams as binary files exactly as received in the data storage unit.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is a diagrammatic illustration of a train event monitoring system according to one embodiment of the invention;
- figure 2 is a diagrammatic illustration of a human machine interface unit, which is part of the train event monitoring system of figure 1.

Corresponding reference numerals refer to the same or corresponding parts in each of the figures.

### DETAILED DESCRIPTION OF PREFERRED EMBODIMENTS

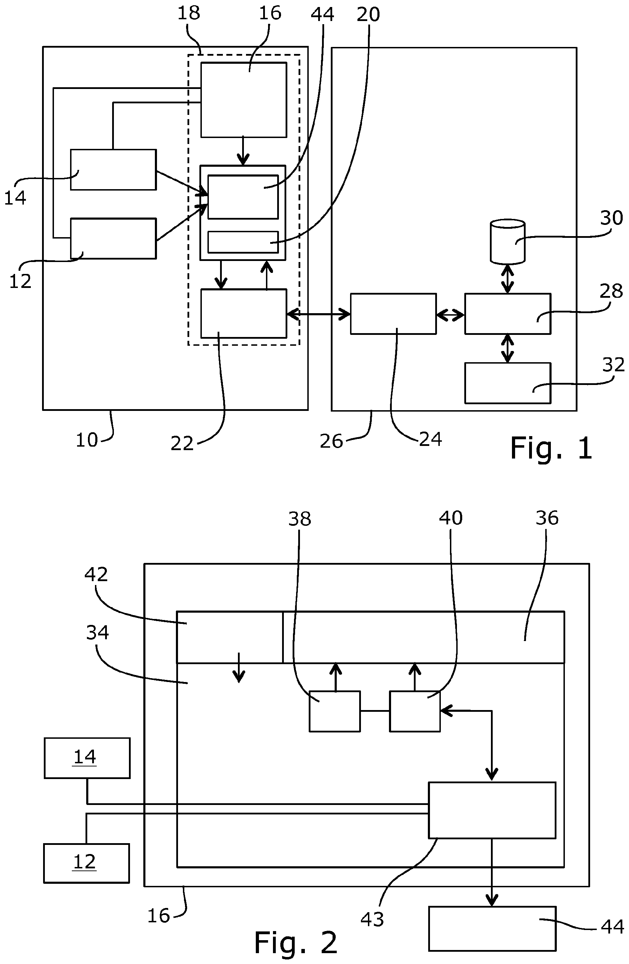

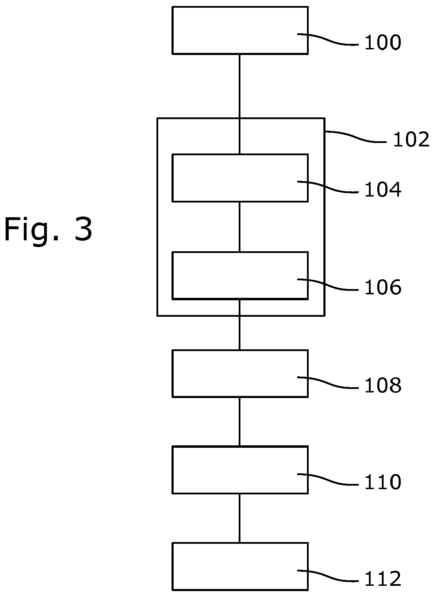

With reference to Figure **1****,** a rail vehicle **10** is provided with an on-board train control and management system **12,** a passenger information system **14** and one or more human-machine interface units **16,** which may be located in the driver's cabin or in a dedicated area of a passenger coach, e.g. a restricted area such as a switch cabinet accessible to the crew. The HMI unit **16** is part of an on-board train event monitoring system **18,** which further includes a data storage unit **20,** e.g. a CCTV recorder, and a train to wayside gateway **22.** The train control and management system **12** may also fully or partly include the on-board train event monitoring system **18.** The train to wayside gateway **22** is able to communicate wirelessly with a wayside gateway **24** of a wayside control centre **26.** The wayside control centre **26** includes an image data server **28,** preferably a CCTV server, connected to a storage server **30** and to an image data client **32,** preferably a CCTV client.

As illustrated in figure **2****,** the human machine interface unit **16** includes a logic hardware unit **34** and an electronic visual display **36,** e.g. a video display, which receives a video signal directly from a graphics or video processor **38** or from a graphics or video memory **40** of the logic hardware unit **34.** The HMI unit **16** may also include a user input interface **42** such as a keyboard or a touch screen connected to the logic hardware unit **34.** The logic hardware unit **34** can be connected to one and/or the other of the train management and control system **12** and passenger information system **14** through a wireless or wired connection. A display processor **43** of the logic hardware unit **34** processes data received from the train management and control system **12** and/or the passenger information system **14** to display visual information on the visual display **36.** The visual information displayed on the visual display **36** may include video images from one or more cameras inside or outside the vehicle, various virtual dials representing e.g. a speedometer, a thermometer, an ammeter or voltmeter, and/or virtual buttons or switches or any other component of a control panel of a rail vehicle.

The logic hardware unit **34** is connected to a processing unit **44** of the on-board train event monitoring system **18** through a wireless or wired point-to-point or network connection. The processing unit **44** is also connected as illustrated on figure **1** with the train management and control system **12** and the passenger information system **14.** Alternatively, the processing unit **44** can be an integral part of the train management and control system **12.**

The collection of screenshot data from the HMI unit **16** will now be described.

On a regular basis, e.g. every 100 ms, the display processor **43** of the logic hardware unit **34** reads a current video frame contained in a frame buffer of the video memory **40** (step **100**). The video frames are processed to reduce their size (step **102**). This processing includes downscaling the video frames (step **104**) and resampling the downscaled video frames (step **106**) at a predetermined lower rate to generate reduced video frames. The reduced video frames are finally encoded (step **108**) with a predetermined codec, e.g. Motion JPEG or H.264, to generate encoded video frames to be sent as screenshot data sets to the processing unit **44** of the train event monitoring system.

To this end, the HMI logic hardware unit **34** generates datagrams including a payload constituted by the screenshot data set, i.e. the encoded video frame or a sequence of screenshot data sets and a header that includes a HMI identification number and a timestamp based on a local clock of the HMI logic hardware unit **34** (step **110**). The datagrams are streamed (step **112**) using standard network protocols, preferably the Real-time Transport Protocol (RTP) controlled by the RTP Control Protocol (RTCP) and using the Network Time Protocol (NTP) for time synchronisation. RTP delivers media streams over IP networks and is commonly used for audio and video such as video conferencing, telephony, etc. RTCP controls RTP by providing functionalities related to transmission statistics, quality of service and synchronisation of multiple streams. NTP enables precise synchronisation of several computers connected to an IP network with the coordinated universal time UTC. More specifically, the header of each RTP datagram includes a synchronisation source for unequivocally identifying the local clock of the HMI logic hardware unit **34** in the RTP session, a sequence number which has a random initial value and is incremented by one for each RTP datagram sent, and the local timestamp, which has a random initial value set for each stream and is thereafter relatively updated to reflect the sampling instant of the first byte in the RTP datagram. This update value is derived from the local clock that increments monotonically and linearly in time to allow synchronisation and jitter calculations.

The RTCP and NTP protocols enable the HMI logic hardware unit **34** to send RTCP reports on a regular basis (e.g. every **5** seconds). Theses reports include a NTP timestamp which indicates the absolute UTC sending time of the packet and a RTP timestamp, which indicates the relative sending time of the packet. As is well known in the art, the absolute timestamp allows the receiver to synchronise the datagrams from different sources or streams.

This video processing, encapsulation and streaming is carried out by the HMI hardware logic unit in real time, i.e. without significant delay or with a delay that is in any case less than the resampling rate. Hence, the time difference between the original video frame(s) contained in the frame buffer and sent to the visual display **36** of the human-machine interface unit **16** and represented by a screenshot data set encapsulated in a given datagram and the corresponding timestamp is less than the resampling rate.

In parallel, the HMI logic hardware unit **34** preferably generates a HMI metadata stream, which can contain sporadic metadata sets generated in response to a notification of a sporadic event, in particular an input signal from an input interface of the HMI, and/or regular metadata sets generated repeatedly to monitor e.g. a state or change of state of the HMI, a screen identifier and/or HMI unit identifier e.g. a fully qualified domain name of the HMI unit **16.**

The HMI metadata sets may include an event type and contextual information. For instance, for a primitive level where a touchscreen is pressed, the event type might be "touchscreen pressed" and the contextual information would be the corresponding bi-dimensional screen coordinates. For a user interface level event where a button is pressed, the event type might be "button N pressed" and the contextual information would include the corresponding bi-dimensional screen coordinates and an information that the button has an "enabled" state. For an application level event where a passenger information system trip code is entered, the event type might be "entered passenger information system trip code" and the contextual information would be the actually entered code. Each HMI metadata set may also include an absolute timestamp in Coordinated Universal Time.

To generate the HMI metadata stream, the HMI logic hardware unit **34** generates metadata datagrams using the same streaming process as for streaming the screenshot data sets. Both streams are generated from the same HMI logic hardware device and therefore have their RTP timestamps set from the same clock. However, the initial random values for the timestamps of each stream are set independently, such that the timestamps of the two streams only relatively relate to each other.

The processing unit **44** communicates with the logic hardware unit **34** of the HMI unit **16** through an Internet Protocol (IP). The processing unit **44** receives the datagrams from the HMI logic hardware unit **34** as well as time-stamped datagrams from other sources, e.g. from the passenger information system **14** or from the train control and management system **12.** The datagrams from the passenger information system **14** may contain audio stream data and metadata relative to the passenger information system. The datagrams from the train control and management system **12** may contain data relative to various parameters of the rail vehicle. They may also contain a lock-start command, the use of which will be explained later.

The processing unit **44** stores the HMI screenshot data sets as a binary file exactly as received, i.e. chronologically by order of arrival, in the data storage unit **20** in CCTV format. The embedded "RTP timestamp" are saved with the datagrams. The "RTP timestamp" and "NTP timestamp" from the RTCP Sender Report associated with the datagram are also stored in the data storage unit **20,** so that synchronisation can still be realised later using UTC.

The metadata stream can be stored by the same process in a separate binary file. The metadata stream can be parsed "online", i.e. when received, in order to extract relevant markers and construct one or several indexes. These indexes provide correspondence between a given event and the corresponding timestamp(s), which enables to locate and navigate directly to the corresponding position in the binary file of screenshot data sets. Alternatively, the metadata binary file can be parsed to create these indexes "offline" i.e. only when required to avoid using storage capacity. Of course both "online" and "offline" methods can be used depending on the indexes and their required usage.

A first example of index would be an index of the changes of screen identifiers or of the occurrences of given screen identifiers. Another example would be an index providing "user confirmation on screen" from application level events. In parallel, the processing unit **44** communicates with the wayside control centre **26** to transfer the content of the data storage unit **20** to the wayside CCTV server **28,** which stores it via the storage server **30.** The throughput of the gateways and the size of the data storage unit must be sufficient for ensuring that all data temporally saved in the storage unit **20** is transferred and permanently stored on the wayside, despite potential temporary interruption of the transfer between the train and the wayside.

The wayside control centre **26** may process the received data before storing it. In particular, it may extract from the screenshot data sets relevant information for identifying the type of screen displayed by the HMI and computing various key performance indicators relative to the rail vehicle **10** or the driver. If the HMI unit **16** can display various display masks, each display mask can be advantageously provided with an identifier, which may be visible (e.g. a mask number displayed in a specific area of the screen) or "hidden" (e.g. a colour code used for predetermined pixels of the screen). The identifier can be read at the wayside control centre **26** and the uploaded records can be indexed accordingly before they are stored. The wayside control centre may also parse the metadata files to extract relevant indexes as described above.

As an example of usage, a user may be interested when a specific screen is displayed on the HMI unit **16,** to view in playback what was then displayed during a time window starting 5 seconds before the event and ending 10 seconds after the event. The query to the system includes a query command code for the function expected as well as parameters including the screen identifier and the preceding and trailing timers respectively of 5 and 10 seconds. Using a screen identifier index, the system locates the event corresponding to the display of this screen and the corresponding "RTP Timestamp". Using the saved "RTP timestamp" and "NTP timestamp" from RTCP Sender Reports associated to the metadata stream and screenshot data stream, the "RTP timestamp" of the screenshot data stream corresponding to the event is computed as well as the start and end timestamps corresponding to the time window. The system then navigates in the screenshot data stream file to the start timestamp position and streams until the end timestamp is reached.

The data storage unit **20** is organised as a first in first out buffer. However, whenever a lock-start command is received, the processing unit **44** sets a pointer that identifies the beginning of a zone which should not be overwritten before an unlocking command is received. The lock start command can be received from the train control and management system **12** or from the wayside. It can be initiated manually by the driver or a crew member of the rail vehicle **10** or by a wayside operator, or automatically by the train control and management system **12** or the wayside control centre **26,** e.g. when an anomaly is detected. The lock-start command can include parameters to more precisely define a pre-lock buffer size and/or an after-lock buffer size and/or a lock-stop event, which can be manual or automatic. Preferably, the locked buffer area of the data storage unit **20** can only be unlocked from the wayside, e.g. as soon as the content of the buffer area has been transferred to the wayside.

While the above example illustrates a preferred embodiment of the present invention, it is noted that various other arrangements can also be considered. The video processing of the video frames by the logic hardware unit of the HMI can be simplified or dispensed with if the resolution of the video frames and their sampling rate are adequate, i.e. not disproportionate relative to the effective information contained and the bandwidth of the transfer between the train to wayside and wayside gateways.

The processing unit **44** may concatenate various datagrams with the same timestamp in a single datagram before storing the datagram in the data storage unit.

## Claims

1. A method of monitoring a human-machine interface comprising an electronic visual display (36) and a HMI logic hardware unit (34) on a rail vehicle, **characterised in that** the following operations are performed by the HMI logic hardware unit (34):
- generating screenshot data sets representative of successive images displayed on the electronic visual display; and
- streaming the screenshot data sets.

2. The method of claim 1, wherein generating the screenshot data sets includes periodically reading bitmap information directed to the electronic visual display, preferably from a video frame buffer.

3. The method of claim 2, wherein generating the screenshot data sets further includes one or more of the following operations:
- scaling, preferably downscaling, the bitmap information;
- sampling the scaled bitmap information at a predetermined rate to generate video frames;
- encoding the video frames with a predetermined codec to generate encoded video frames each constituting one of the screenshot data sets.

4. The method of any one of the preceding claims, wherein streaming the screenshot data sets includes associating each of the screenshot data sets with a screenshot timestamp.

5. The method of any one of the preceding claims, wherein the following operations are performed by the HMI logic hardware unit (34):
- generating successive HMI metadata sets relative to the human machine interface;
- streaming the HMI metadata sets relative to the human machine interface associated with metadata timestamps.

6. The method of claim 5, wherein the HMI metadata sets include one or more of the following:
- an event type;
- contextual information;
- an absolute timestamp in Coordinated Universal Time.

7. The method of claim 6, wherein the HMI event type and contextual information relate to at least one of the following:
- primitive level events each indicative of a change of state of the human machine interface generated by a user input interface (42) or the HMI logic hardware unit (34);
- user interface level events each indicative of a change of state of the human machine interface generated by a user input interface (42) or the HMI logic hardware unit (34)and interpreted in function of further data relative to a current state of the human machine interface;
- application level events each indicative of a state or change of state of an application or function realised by the human machine interface.

8. The method of any one of claims 1 to 7, further comprising the following operation performed by an on-board (20) or wayside (30) storage unit, preferably a CCTV recorder: receiving the streamed screenshot data sets and storing the streamed screenshot data sets in a first in first out buffer of the on-board or wayside recorder (20).

9. The method of claim 8, further comprising a locking procedure performed by the on-board (20) or wayside (30) storage unit triggered by a lock-start event to prevent overwriting of critical data stored and/or to be stored in a critical portion of the first in first out buffer, said critical portion being preferably defined by a pre-lock buffer size and an after-lock buffer size or a lock-stop event.

10. The method of claim 9, wherein the locking procedure further comprises unlocking the critical portion from an image data server (28) after the critical data has been retrieved from the data storage unit (20) to the wayside storage unit (30).

11. The method of claim 9 or claim 10, wherein the lock-start event is generated by a locking source, wherein the locking source is one or more of the following: a human-machine interface unit, an on-board train control and management system (12), and a remote operational control centre (26).

12. The method of any one of claims 8 to 11, further comprising a merging operation performed by the on-board (20) or wayside (30) storage unit, wherein the merging operation includes gathering additional time-stamped data from a train control and management system (12) and/or from a passenger information system (14) and merging said additional time-stamped data with the streamed screenshot data before storing the streamed screenshot data sets in the first in first out buffer of the on-board (20) or wayside (30) storage unit together with the merged time-stamped data.

13. A human-machine interface comprising an electronic visual display and a HMI logic hardware unit (34), **characterised in that** the HMI logic hardware unit (34) comprises:
- screenshot data sets generating means for generating screenshot data sets representative of successive images displayed on the electronic visual display;
- transmission means for streaming the screenshot data sets, wherein the transmission means preferably include means for associating each of the screenshot data sets with a screenshot timestamp.

14. A train event monitoring installation comprising:
- the human-machine interface of claim 13; and
- an on-board (20) or wayside (30) storage unit, preferably a CCTV recorder, for receiving the streamed screenshot data sets and storing the streamed screenshot data sets in a first in first out buffer of the on-board (20) or wayside (30) storage unit.

15. The train event monitoring installation of claim 14, further comprising a processing unit (44) for receiving the screenshot data sets from the HMI logic hardware unit (34) as well as time-stamped datagrams from the HMI logic hardware unit (34) or other sources and for storing the screenshot data sets and time-stamped datagrams as binary files exactly as received in the data storage unit (20).
